**Europäisches Patentamt**

**European Patent Office**

**Office européen des brevets**

(11) Numéro de publication: **0 131 476**
**B1**

(12) **FASCICULE DE BREVET EUROPEEN**

(45) Date de publication du fascicule du brevet: **07.12.88**

(21) Numéro de dépôt: **84400858.1**

(22) Date de dépôt: **27.04.84**

(51) Int. Cl.⁴: **A 63 F 3/00**

(54) **Plaquette composite repliable comportant des moyens de la rendre rigide.**

(30) Priorité: **14.06.83 FR 8309829**

(43) Date de publication de la demande:
**16.01.85 Bulletin 85/03**

(45) Mention de la délivrance du brevet:
**07.12.88 Bulletin 88/49**

(84) Etats contractants désignés:
**AT BE CH DE GB IT LI LU NL SE**

(56) Documents cités:
**US-A-2 774 599**
**US-A-4 120 100**

(73) Titulaire: **Thallinger, Daniel**
**4, sente Castel**
**F-92370 Chaville (FR)**

(72) Inventeur: **Thallinger, Daniel**
**4, sente Castel**
**F-92370 Chaville (FR)**

Courier Press, Leamington Spa, England.

EP 0 131 476 B1

## Description

La présente invention concerne les dispositifs d'articulation combinés à un support pliant mince, pour le rigidifier au dépliage.

Dans des dispostifs connus de ce genre, des systèmes de rigidification extérieurs au support sont nécessaires, par exemple des tirettes, pour assurer son soutien lorsqu'il est déplié; ils sont plus volumineux, plus encombrants car les systèmes ne sont pas incorporés. Ils n'offrent pas la possibilité de rangement dans le méme espace minimum, ils sont plus lourds.

Les mêmes inconvénients sont présentes dans le dispositif connu du document US—A—2774599, qui divulgue une combinaison de caractéristiques selon la première partie de la revendication 1.

Le dispositif suivant l'invention permet d'éviter ces inconvénients. Il est en effet caractérisé par un moyen de verrouillage selon la partie caractérisante de la revendication 1.

Selon une première variante, le moyen de verrouillage consiste en un disque découpé dans l'épaisseur du support de base.

Selon une deuxième variante, le moyen de verrouillage consiste en un disque rapporté, d'une matière différente.

Dans les deux variantes le support comporte des joues de fermeture, enserrant le disque, mais le laissant libre en rotation.

Le disque est manoeuvrable par la targette, solidaire; ses déplacements s'effectuent de butée à butée.

Le matériau employé doit être à la fois souple en épaisseur réduite (zones de pliage) et rigide en pleine matière (zones de soutien). Il sera généralement du type matière plastique ou composite ainsi que les joues de fermeture.

La structuration du support peut aussi s'effectuer autour d'une âme centrale de matière souple-dur; les volets du pliage sont alors rapportés de chaque coté de cette âme de pliage.

Le dessin annexé illustre à titre d'exemple un mode de réalisation du dispositif conforme à la présente invention.

Tel qu'il est représenté le dispositif comporte un ensemble support-disque formé par un support essentiellement plan (1) et par un disque (3) découpé mais intégré dans ce support, dans lequel, avant découpage du disque (3), de larges voies de pliage en creux (2), en conformité de débattement, ont été ménagés sur chaque face, à égalité de profondeur, de manière à ne conserver dans ces voies de débattement, qu'une matière minimum, centrale, utile à la rotation du disque (3).

Le disque (3), comportant une languette de manoeuvre (4), et le secteur de débattement (5), délimité par deux butées (7), sont réalises de manière à être en ajustement libre avec le reste du support (I) dans lequel le disque (3) est centré.

L'ensemble est pris entre deux fermetures plastiques ou joues latérales (6), pouvant être rainurées pour le pliage, maintenant étroitement le disque (3) mais le laissant libre en rotation, dans le débattement prévu entre les deux butées (7).

Des films plastiques intermédiaires (8) sont interposés, si utile, lors de la fabrication, pour éviter l'adhérence du disque (3).

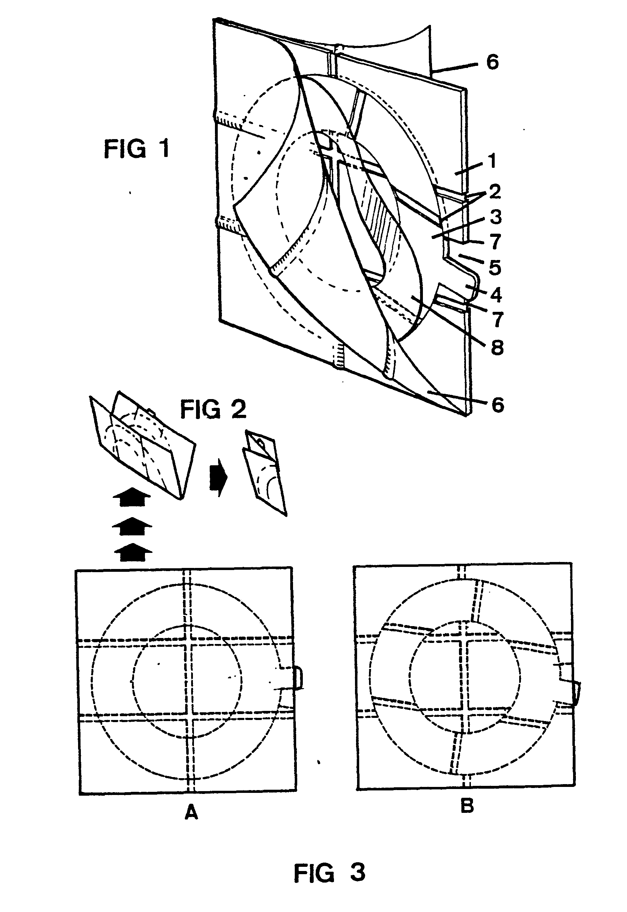

Le disque (3) fait partie intégrante du support (I) de sorte que, lorsque les voies depliage (2) sont en correspondance un pliage est possible, voir fig. 3A;

lorsque les voies de pliage (2) sont décalées le soutien du support (I) est assuré, voir fig. 3B.

La préhension est généralement exercée avec la main sur la périphérie du support (1) mais une poignée ou une tige de préhension peuvent être rajoutées.

Le dispositif objet de l'invention peut être utilisé dans tous les domaines où un support plat et mince doit être rigidifié au dépliage et tout particulièrement lorsque le support est mince et doit être plié pour être rangé dans un espace réduit.

D'autres applications particulièrement intéressantes peuvent être son intégration dans les faces de sacs pliants, la rigidification des cartes routières, marines, de rallyes etc., des jeux pliants; étendu à des matériels d'équipement plus lourds: la signalisation mobile, des panneaux réfléchissants, le camping etc.

## Revendications

1. Dispositif d'articulation combiné à un support pliant mince (1), rigidifiable à l'état déplié, ledit support comportant des premières voies de pliage en creux (2) et des moyens de verrouillage actionnables pour assurer la rigidification dudit support (1) à l'état déplié, caractérisé en ce que lesdits moyens de verrouillage sont constitués par un élément interne en forme de disque (3) faisant partie intégrante dudit support (1), ledit élément comportant des secondes voies de pliage et de débattement et étant manoeuvrable par une languette (4) entre une première position dans laquelle lesdites premières et secondes lignes de pliage sont alignées de manière à permettre le pliage dudit dispositif, et une deuxième position dans laquelle lesdites premières et secondes lignes de pliage sont décalées de manière a rigidifier le dispositif à l'état déplié.

2. Dispositif selon la revendication 1, caractérisé en ce que l'élément de verrouillage en forme de disque (3) est de même épaisseur que le support (1).

3. Dispositif selon la revendication 1, caractérisé en ce que le support comporte deux butées (7) entre lesquelles le disque est manoeuvrable par la languette (4).

4. Dispositif selon la revendication 2, caractérisé en ce que l'ensemble constitué par le support (1) et le disque (3) comporte des joues latérales de fermeture (6).

5. Dispositif selon l'une des revendications 1 à 4, caractérisé en ce qu'il comprend une tige de préhension faisant saillie sur la périphérie du support.

## Patentansprüche

1. Gelenkvorrichtung kombiniert mit einer zusammenfaltbaren dünen Unterlage (I), streckbar in geöffnetem zustand, die aus verdünnerten ersten Faltlinien (2) besteht und bewegbaren Verriegelungsmitteln, damit die Streckung, in geöffnetem Zustand erhalten bleibt, characterisiert dadurch, dass das gesagte Verriegelungsmittel aus einer inneren Scheibe (3) besteht die zu der Unterlage (I) dazugehört, dass das gesagte Element die zweite Faltlinie enthält und bewegbar ist durch eine Lache (4) zwischen einer ersten Position in welcher die beschriebenen ersten und zweiten Faltlinien in gleicher flucht stehen, sodass die Vorrichtung faltbar ist und einer zweiten Position, in welcher die beschriebenen ersten und zweiten Faltlinien verschoben sind, sodass die Streckung in geöffnetem Zustand erhalten bleibt.

2. Vorrichtung entsprechend dem erstem Gebietsanspruch characterisiert dadurch, dass das Verriegelungselement in Scheibenform (3) in gleichen Dicke ist, wie die Unterlage (I).

3. Vorrichtung entsprechend dem erstem Gebietsanspruch characterisiert dadurch, dass die Unterlage zwei Anschläge (7) hat, zwischen denen die Scheibe durch die Lache (4) verschiebbar ist.

4. Vorrichtung entsprechend dem zweiten Gebietsanspruch characterisiert dadurch, dass die gesamte Vorrichtung die aus der Unterlage (I) und der Scheibe (3) besteht, seitliche Schliessbakken (6) enthält.

5. Vorrichtung entsprechend einer der Gebietsansprüche von 1 bis 4, characterisiert dadurch dass dijenige eine Handgrifflache enthält, die seitlich an der Unterlage hervorspringt.

## Claims

1. Articulation device combined with a thin folding support (1), rigidifiable when unfolded, the said support comprising first folding grooves (2) and locking mechanisms set in action to make sure the rigidification of the said support (1) when unfolded characterized by the fact that the said locking mechanisms are consisting of disc shaped internal element (3) being an integral part of the said support (1), the said element including second folding and motion tracks and being set in motion by a small tongue (4) between a first position in which the said first and second folding lines are put in a line in such a way that they allow the folding of the said system and a second position in which the said first and second folding lines are displaced in such a way to rigidify the system when unfolded.

2. Device as in claim 1, characterized by the fact that the disc shaped locking element (3) has the same thickness as the support (1).

3. Device as in claim 1, characterized by the fact that the support comprises two stops (7) between which the disc is set in motion by the small tongue (4).

4. Device as in claim 2, characterized by the fact that the support (1) and disc (3) constituted unit includes side closing sheets (6).

5. Device as in one of 1 to 4 claims characterized by the fact that it includes a holding rod jutting out on the support periphery.

EP 0 131 476 B1

**FIG 1**

**FIG 2**

A          B

**FIG 3**